(19)

Europäisches
Patentamt
European
Patent Office
Office européen
des brevets

(11) **EP 4 641 734 A1**

(12) **EUROPEAN PATENT APPLICATION**
published in accordance with Art. 153(4) EPC

(43) Date of publication:
29.10.2025  Bulletin 2025/44

(21) Application number: 25740998.7

(22) Date of filing: 16.01.2025

(51) International Patent Classification (IPC):
*H01M 10/0562* (2010.01)     *H01M 4/134* (2010.01)
*H01M 4/02* (2006.01)

(52) Cooperative Patent Classification (CPC):
H01M 4/02; H01M 4/134; H01M 10/0562

(86) International application number:
PCT/KR2025/099014

(87) International publication number:
WO 2025/165171 (07.08.2025 Gazette 2025/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  30.01.2024  KR 20240013764

(71) Applicant: LG Energy Solution, Ltd.
Seoul 07335 (KR)

(72) Inventors:
• SHIM, Sunggeun
  Daejeon 34122 (KR)
• KIM, Youngbok
  Daejeon 34122 (KR)
• LEE, Wonrak
  Daejeon 34122 (KR)

(74) Representative: Goddar, Heinz J.
Boehmert & Boehmert
Anwaltspartnerschaft mbB
Pettenkoferstrasse 22
80336 München (DE)

(54) **SULFIDE-BASED SOLID ELECTROLYTE AND ALL-SOLID-STATE BATTERY COMPRISING SAME**

(57)    The present disclosure relates to a sulfide-based solid electrolyte and an all-solid-state battery comprising same, and more particularly to a sulfide-based solid electrolyte comprising lithium (Li), phosphorus (P), sulfur (S), and chlorine (C), wherein a heterogeneous element is substituted at the phosphorus (P) site, and if at least two selected from the group consisting of Ge, Sn, Sb and Si are substituted in equal proportions, the ionic conductivity of the sulfide-based solid electrolyte can be improved.

EP 4 641 734 A1

**Description**

[Technical Field]

Cross-citation with Related Applications

This application claims the benefit of priority to Korean Patent Application No. 10-2024-0013764, filed January 30, 2024.

Technical Field

The present disclosure relates to a sulfide-based solid electrolyte and an all-solid-state battery comprising same.

[Related Art]

A variety of batteries are being researched to overcome the limitations of the current lithium secondary batteries in terms of capacity, safety, output, large-scale applications, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. It also has the advantage of being able to use lithum metal or lithium alloys as negative electrode materials, which can dramatically improve the energy density relative to the mass and volume of the battery.

However, in an all-solid-state battery, the solid electrolyte is applied in a small particle size, which can lead to more interfaces and increased resistance, which in turn can degrade the performance, lifetime, and stability of the all-solid-state battery, resulting in poor battery performance.

The degradation of battery performance due to this increase in interfacial resistance can be offset by increasing the ionic conductivity of the solid electrolyte.

Therefore, it is necessary to develop a solid electrolyte with high ionic conductivity as a solid electrolyte for an all-solid-state battery.

[Prior Art Reference]

[Patent Reference]

(Patent Reference 1) Japanese Laid-open Patent Publication No. 2015-22015

[Detailed Description of the Invention]

[Technical Problem]

The inventors of the present disclosure have conducted various studies to solve the above problems and have found that in a sulfide-based solid electrolyte comprising lithium (Li), phosphorus (P), sulfur (S), and chlorine (C), the ionic conductivity of the sulfide-based solid electrolyte is improved when the P site is substituted with two or more elements selected from the group consisting of Ge, Sn, Sb and Si.

Accordingly, it is an object of the present disclosure to provide a sulfide-based solid electrolyte with improved ionic conductivity.

It is another object of the present disclosure to provide an all-solid-state battery comprising a sulfide-based solid electrolyte with improved ionic conductivity.

[Technical Solution]

To accomplish the above objectives, the present disclosure provides a sulfide-based solid electrolyte comprising lithium (Li), phosphorus (P), sulfur (S), chlorine (C) and M, wherein M is included in a substituted form at the phosphorus (P) site and comprises at least two selected from the group consisting of Ge, Sn, Sb and Si.

In one example of the present disclosure, the sulfide-based solid electrolyte is provided as represented by Formula 1 below:

<Formula 1>     $Li_{(6-x)}P_yM_{(1-y)}S_{(5-x)}Cl_{(1+x)}$

wherein x is 0 < x < 0.6, and y is 0 < y ≤ 0.9,
wherein M is $M1_aM2_b$ (wherein $0 < a+b \leq 0.1$, and a+b = 1-y), $M1_aM2_bM3_c$ (wherein $0 < a+b+c \leq 0.1$, and a+b+c = 1-y) or $M1_aM2_bM3_cM4_d$ (wherein $0 < a+b+c+d \leq 0.1$, and a+b+c+d = 1-y),
wherein M1, M2, M3, and M4 are different elements selected from the group consisting of Ge, Si, Sb and Sn, respectively.

In one example of the present disclosure, there is provided a sulfide-based solid electrolyte, wherein the two or more elements substituted at the phosphorus (P) site are substituted in equal proportions, such that M is $M1_aM2_b$ (wherein $0 < a+b \leq 0.1$, a+b = 1-y, and a=b), $M1_aM2_bM3_c$ (wherein $0 < a+b+c \leq 0.1$, a+b+c = 1-y, and a=b=c) or $M1_aM2_bM3_cM4_d$ (wherein $0 < a+b+c+d \leq 0.1$, a+b+c+d = 1-y, and a=b=c=d).

In one example of the present disclosure, there is provided a sulfide-based solid electrolyte, which has an argyrodite-type crystal structure.

In one example of the present disclosure, there is provided a sulfide-based solid electrolyte with an ionic conductivity of 4 to 6 mS/cm.

In one example of the present disclosure, there is provided a sulfide-based solid electrolyte, wherein the impurity content in the sulfide-based solid electrolyte is 0% to 5% based on the intensity of the XRD main peak.

In one example of the present disclosure, there is provided a sulfide-based solid electrolyte, wherein the impurity comprises $Li_2S$, LiCl, or a compound thereof.

The present disclosure also provides an all-solid-state battery comprising a positive electrode, a negative electrode, and the sulfide-based solid electrolyte interposed therebetween.

In one example of the present disclosure, there is provided an all-solid-state battery, wherein the negative electrode may be a lithium negative electrode comprising a lithium metal.

[Advantageous Effects]

According to the solid electrolyte according to the present disclosure, by substituting two or more elements selected from the group consisting of Ge, Sn, Sb and Si for a part of the phosphorus (P) site included in the sulfide-based solid electrolyte, the increase of solid solubility of the substituent is improved, thereby improving the ionic conductivity of the sulfide-based solid electrolyte and reducing impurities.

[Best Mode]

Hereinafter, the present disclosure will be described in more detail to provide a better understanding.

The terms and words used in this specification and claims are not to be construed in their ordinary or dictionary sense, but rather in a sense and concept consistent with the technical idea of the present disclosure, based on the principle that the inventor may define the concept of a term as he/her sees fit to best describe his/her invention.

**Sulfide-based solid electrolyte**

The present disclosure relates to a sulfide-based solid electrolyte.

The sulfide-based solid electrolyte according to the present disclosure comprises lithium (Li), phosphorus (P), sulfur (S), chlorine (C) and M, wherein M is included in a partially substituted form at the phosphorus (P) site and comprises at least two selected from the group consisting of Ge, Sn, Sb and Si.

When two or more elements selected from the group consisting of Ge, Sn, Sb and Si are substituted at the P site, the ionic conductivity of the sulfide-based solid electrolyte can be improved by increasing the disorder in the structure, allowing lithium ions to move smoothly. Preferably, the two or more elements may be substituted in equal proportions.

If a single element is substituted at the P site, the amount of the substituted element may exceed the permissible substitution level within the structure of the sulfide-based solid electrolyte, leading to its precipitation as an impurity. In this case, the ionic conductivity of the sulfide-based solid electrolyte can be improved by reducing the substitution ratio of the single element and adding elements of heterogeneous types together to increase the substitution ratio. For example, if two heterogeneous elements, Sn and Si, are substituted in equal proportions, resulting in $P_{0.94}Sn_{0.03}Si_{0.03}$, compared to the case that only single element, Sn, is substituted at the P site, resulting in $P_{0.94}Sn_{0.06}$, the ionic conductivity can be improved by increasing the disorder in the structure.

In one example of the present disclosure, the sulfide-based solid electrolyte may be that represented by Formula 1 below:

<Formula 1> $Li_{(6-x)}P_yM_{(1-y)}S_{(5-x)}Cl_{(1+x)}$

wherein x is 0 < x < 0.6, and y is 0 < y ≤ 0.9,

wherein M is $M1_aM2_b$ (wherein 0 < a+b ≤ 0.1, and a+b = 1-y), $M1_aM2_bM3_c$ (wherein 0 < a+b+c ≤ 0.1, and a+b+c = 1-y) or $M1_aM2_bM3_cM4_d$ (wherein 0 < a+b+c+d ≤ 0.1, and a+b+c+d = 1-y),

wherein M1, M2, M3, and M4 are different elements selected from the group consisting of Ge, Si, Sb and Sn, respectively.

For example, the sulfide-based solid electrolyte represented by Formula 1 above may be $Li_{5.5}P_{0.94}Si_{0.03}Sn_{0.03}S_{4.5}Cl_{1.5}$.

Furthermore, the two or more elements substituted at the P site may be substituted in equal proportions. If the ratio of two or more substituted elements is not equal, impurities may occur or the ionic conductivity may decrease. For example, in Formula 1 above, M may be $M1_aM2_b$ (wherein 0 < a+b ≤ 0.1, a+b = 1-y, and a=b), $M1_aM2_bM3_c$ (wherein 0 < a+b+c ≤ 0.1, a+b+c = 1-y, and a=b=c) or $M1_aM2_bM3_cM4_d$ (wherein 0 < a+b+c+d ≤ 0.1, a+b+c+d = 1-y, and a=b=c=d).

In one example of the present disclosure, the sulfide-based solid electrolyte may have an argyrodite-type crystal structure. The argyrodite-type crystal structure is the structure obtained by replacing a part of the substance with chlorine.

The crystal structure of the sulfide-based solid electrolyte is originally a face-centered cubic lattice (FCC) structure, which means that lithium ions are trapped in the sulfur atom octahedron during their movement. However, replacing a part of the substance with chlorine can change the strength of the electrostatic attraction, altering the arrangement of atoms within the structure, which in turn lowers the activation energy and provides a new pathway for lithium ion migration, thus improving ionic conductivity. In addition to this argyrodite-type crystal structure, the present disclosure provides a structure in which two or more elements are substituted at the P site, which reduces the content of impurities and further improves the ionic conductivity.

In one example of the present disclosure, the ionic conductivity of the sulfide-based solid electrolyte may be 4 to 6 mS/cm.

The sulfide-based solid electrolyte may have two or more elements substituted at the P site, resulting in a disorder having a crystal structure. This can facilitate the movement of lithium ions, and the ionic conductivity can be improved by increasing the ratio of solid solubility of the elements, which can also reduce impurities.

In one example of the present disclosure, the impurity content in the sulfide-based solid electrolyte may be 0% to 5% based on the intensity of the XRD main peak, and the impurities may include $Li_2S$, LiCl, or a compound thereof. The impurities may be result from the raw materials of the sulfide-based solid electrolyte failing to be dissolved into the structure and precipitating as impurities, or the formation of new types of impurities among themselves.

## Method of preparing sulfide-based solid electrolyte

The present disclosure also relates to a method of preparing a sulfide-based solid electrolyte.

A method of preparing a sulfide-based solid electrolyte according to the present disclosure comprises: (S1) grinding raw materials; and (S2) heat treating the powder obtained in step (S1). This can also be referred to as a solid-phase synthesis.

Hereinafter, a method for preparing a sulfide-based solid electrolyte according to the present disclosure will be described in more detail by each step.

In one example of the present disclosure, in step (S1), the raw materials may be ground.

The raw materials may refer to the raw materials of each element contained in the sulfide-based solid electrolyte. The above raw materials are not particularly limited as long as they are substances commonly used in the art as raw materials for each element. For example, the raw materials may include raw materials forming a sulfide-based solid electrolyte and raw materials of substituents. The raw materials forming the sulfide-based solid electrolyte may include lithium sulfide ($Li_2S$), phosphorus pentasulfide ($P_2S_5$), and lithium chloride (LiCl), and the raw materials of the substituents may include at least two selected from the group consisting of silicon (Si), silicon sulfide ($SiS_2$), tin sulfide ($SnS_2$), germanium sulfide ($GeS_2$), and antimony sulfide ($Sb_2S_5$). In addition, for each mole of lithium sulfide ($Li_2S$), 0.1 to 0.5 mole of phosphorus pentasulfide ($P_2S_5$), 0.5 to 1.5 mole of lithium chloride (LiCl), and 0.01 to 0.1 mole of raw materials of the above substituents may be used. Specifically, the phosphorus pentasulfide ($P_2S_5$) may be 0.1 mole or more, 0.15 mole or more, or 0.2 mole or more, and may be used in amounts of 0.5 mole or less, 0.4 mole or less, or 0.3 mole or less. Further, the lithium chloride (LiCl) may be 0.5 moles or more, 0.6 moles or more, or 0.7 moles or more, and may be used in amounts of 1.5 moles or less, 1.4 moles or less, 1.3 moles or less, 1.2 moles or less, 1.1 moles or less, 1.0 moles or less, 0.9 moles or less, or 0.8 moles or less. Furthermore, the raw materials of the substituents may be 0.01 moles or more, 0.02 moles or more, or 0.03 moles or more, and may be used in amounts of 0.1 moles or less, 0.09 moles or less, 0.08 moles or less, 0.07 moles or less, 0.06 moles or less, or 0.05 moles or less.

Further, the grinding method is not particularly limited as long as it can be practiced to obtain a powder. For example, the grinding method may be milling, which may be hand milling, ball milling, or the like.

In one example of the present disclosure, in step (S2), the powder obtained in step (S1) may be heat treated.

The heat treatment may be carried out under an inert atmosphere, at a temperature of 400°C to 600°C and under conditions of 10 hours to 14 hours. The inert atmosphere may refer to a nitrogen, helium, argon, or carbon dioxide atmosphere. The temperature may be 400°C or more, 450°C or more, or 500°C or more, and may be 600°C or less, 580°C or less, or 560°C or less.

Furthermore, the sulfide-based solid electrolyte according to the present disclosure can be obtained through the above steps (S1) and (S2), and the manufacturing process including the above steps (S1) and (S2) can be carried out in a glove box that is not exposed to moisture and oxygen.

**All-solid-state battery**

The present disclosure also relates to an all-solid-state battery comprising the sulfide-based solid electrolyte.

An all-solid-state battery according to the present disclosure comprises: the sulfide-based solid electrolyte; a positive electrode formed on one side of the sulfide-based solid electrolyte; and a negative electrode formed on the other side of the sulfide-based solid electrolyte.

In one example of the present disclosure, the positive electrode may include a positive electrode active material, a conductive material, and a binder.

In the present disclosure, the positive electrode included in the all-solid-state battery includes a positive electrode active material layer, wherein the positive electrode active material layer may be formed on one side of the positive electrode current collector.

The positive electrode active material layer includes a positive electrode active material, a conductive material, and a binder.

Furthermore, the positive electrode active material may be any material capable of reversibly adsorbing and releasing lithium ions, without being particularly limited thereto, for example, a layered compound such as lithium cobalt oxide ($LiCoO_2$), lithium nickel oxide ($LiNiO_2$), $Li[Ni_xCo_yMn_zM_v]O_2$ (wherein M is any one or two or more elements selected from the group consisting of Al, Ga and In; and $0.3 \leq x < 1.0$, $0 \leq y$, $z \leq 0.5$, $0 \leq v \leq 0.1$, and $x+y+z+v=1$), $Li(Li_aM_{b-a-b'}M'_{b'})O_{2-c}A_c$ (wherein $0 \leq a \leq 0.2$, $0.6 \leq b \leq 1$, $0 \leq b' \leq 0.2$, and $0 \leq c \leq 0.2$; M comprises at least one selected from the group consisting of Mn, Ni, Co, Fe, Cr, V, Cu, Zn, and Ti; M' comprises at least one selected from the group consisting of Al, Mg and B; and A comprises at least one selected from the group consisting of P, F, S and N), or a compound substituted with one or more transition metals; a lithium manganese oxide such as a compound of formula $Li_{1+y}Mn_{2-y}O_4$ (wherein y is 0 to 0.33), $LiMnO_3$, $LiMn_2O_3$, or $LiMnO_2$; a lithium copper oxide ($Li_2CuO_2$); a vanadium oxide, such as $LiV_3O_3$, $LiFe_3O_4$, $V_2O_5$, or $Cu_2V_2O_7$; a Ni site-type lithium nickel oxide represented by formula $LiNi_{1-y}MyO_2$ (wherein M is Co, Mn, Al, Cu, Fe, Mg, B or Ga, and y is 0.01 to 0.3; a lithium manganese complex oxide represented by formula LiMn2-yMyO2 (wherein M is Co, Ni, Fe, Cr, Zn, or Ta, and y is 0.01 to 0.1) or $Li_2Mn_3MO_8$ (wherein M is Fe, Co, Ni, Cu, or Zn); $LiMn_2O_4$, in which a portion of the Li in the formula is substituted by an alkaline earth metal ion; a disulfide compound; $Fe_2(MoO_4)_3$; and the like, but not limited thereto.

Further, the positive electrode active material may be included in an amount of 60 to 80% by weight based on the total weight of the positive electrode active material layer. Specifically, the content of the positive electrode active material may be 60% by weight or more, 65% by weight or more, or 68% by weight or more, 72% by weight or less, 75% by weight or less, or 80% by weight or less. If the content of the positive electrode active material is less than 60% by weight, the battery performance may be reduced, and if the content is greater than 80% by weight, the mass transfer resistance may be increased.

Furthermore, the conductive material is not particularly limited as long as it prevents side reactions in the internal environment of an all-solid-state battery and has excellent electrical conductivity without causing chemical changes in the battery, and graphite or conductive carbon can be used as a representative, for example, graphite such as natural graphite, artificial graphite, and the like; carbon black such as carbon black, acetylene black, ketjen black, denka black, thermal black, channel black, furnace black, lamp black, summer black, and the like; carbon-based materials having a crystal structure of graphene or graphite; conductive fibers such as carbon fibers, metal fibers, etc.; carbon fluorides; metal powders, such as aluminum powder, nickel powder, etc.; conductive whiskeys, such as zinc oxide, potassium titanate, etc.; conductive oxides, such as titanium oxide; and conductive polymers, such as polyphenylene derivatives; can be used alone or in a mixture of two or more of the foregoing, but are not necessarily limited thereto. Preferably, the conductive material may comprise vapor-grown carbon fiber (VGCF).

Further, the conductive material may be comprised in an amount of 1% by weight to 5% by weight based on the total weight of the positive electrode active material layer, and more specifically, the content of the conductive material may be 1% by weight or more, 1.5% by weight or more, 2% by weight or more, and may be 4% by weight or less, 4.5% by weight or less, or 5% by weight or less. If the content of the conductive material is too small, such as less than 1% by weight, it is difficult to expect the effect of improving the electrical conductivity or the electrochemical properties of the battery may be degraded, and if it is too large, such as more than 5% by weight, the amount of positive electrode active material may be relatively small, resulting in a decrease in capacity and energy density. The method of incorporating the conductive material into the positive electrode is not substantially limited, and any conventional method known in the art can be used, such as mixing with or coating the positive electrode active material.

The binder is a component that assists in the bonding of the positive electrode active material and the conductive material or the bonding to a current collector, and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be comprised in an amount of 0.5% by weight to 4% by weight based on the total weight of the positive electrode active material layer, and more specifically, the content of the binder may be 0.5% by weight or more, 1% by weight or more, 1.5% by weight or more, 3% by weight or less, 3.5% by weight or less, or 4% by weight or less. If the binder content is less than 0.5% by weight, the adhesion of the positive electrode active material to the positive electrode current collector may be reduced, and if the binder content is greater than 4% by weight, the adhesion may be improved, but the content of the positive electrode active material may be reduced, resulting in a lower cell capacity.

Further, the positive electrode current collector supports the positive electrode active material layer and serves to transfer electrons between the outer wire and the positive electrode active material layer.

The positive electrode current collector is not particularly limited as long as it has a high electronic conductivity without causing chemical changes in an all-solid-state battery. For example, copper, stainless steel, aluminum, nickel, titanium, palladium, calcined carbon, copper or stainless steel whose surface is treated with carbon, nickel, or silver, aluminum-cadmium alloy, and the like may be used as the positive electrode current collector.

The positive electrode current collector may have a microscopic uneven structure or adopt a three-dimensional porous structure on the surface of the positive electrode current collector to strengthen the binding force with the positive electrode active material layer. Accordingly, the positive electrode current collector may comprise various forms such as film, sheet, foil, mesh, net, porous material, foam, nonwoven material, and the like.

The positive electrode as described above can be manufactured according to conventional methods, and more specifically, by applying a composition for forming a positive electrode active material layer prepared by mixing a positive electrode active material with a conductive material and a binder in an organic solvent on the positive electrode current collector and drying same, and optionally, compression molding same on the current collector to improve the electrode density. In this case, it is preferable to use an organic solvent that can uniformly disperse a positive electrode active material, a binder and a conductive material, and is easily evaporated. Specifically, the examples include acetonitrile, methanol, ethanol, tetrahydrofuran, water, and isopropyl alcohol.

In the present disclosure, the negative electrode comprised in the all-solid-state battery comprises a negative electrode active material layer, wherein the negative electrode active material layer may be formed on one side of the negative electrode current collector.

The negative electrode active material may comprise a material capable of reversibly intercalating or deintercalating lithium ($Li^+$), a material capable of reacting with lithium ions to reversibly form a lithium-containing compound, a lithium metal, or a lithium alloy.

The material into which the lithium ions ($Li^+$) can be reversibly inserted or removed can be, for example, crystalline carbon, amorphous carbon, or a mixture thereof. The material capable of reacting with the lithium ions ($Li^+$) to reversibly form a lithium-containing compound may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be a lithium metal or a lithium-indium alloy (Li-In), more specifically, it may be in the form of a lithium metal or a lithium thin film or a lithium-indium alloy thin film or powder.

The negative electrode active material may be comprised in an amount of 40 to 80% by weight based on the total weight of the negative electrode active material layer. Specifically, the content of the negative electrode active material may be 40% by weight or more, 50% by weight or more, or may be 70% by weight or less, or 80% by weight or less. If the content of the negative electrode active material is less than 40% by weight, the connectivity between the wet negative electrode active material layer and the dry negative electrode active material layer may be insufficient, and if the content is greater than 80% by weight, the mass transfer resistance may be greater.

Further, the binder is as described above for the positive electrode active material layer.

In addition, the conductive material is as described above for the positive electrode active material layer.

Furthermore, the negative electrode current collector is not particularly limited as long as it is conductive without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, like the positive electrode current collector, the negative electrode current collector can be in various forms, such as a film, sheet, foil, net, porous material, foam, nonwoven material, etc. with fine irregularities formed on the surface.

The method of manufacturing a negative electrode is not particularly limited, and can be manufactured by forming a negative electrode active material layer on the negative electrode current collector using a conventional method of forming a layer or a film. For example, methods such as pressing, coating, or deposition can be utilized. The negative electrode of the present disclosure also includes a case in which a metallic lithium thin film is formed on a metal plate by initial charging after the battery is assembled without a lithium thin film on the negative electrode current collector.

**Battery module**

The present disclosure also relates to a battery module comprising the all-solid-state battery as a unit cell, a battery pack comprising the battery module, and a device comprising the battery pack as a power source.

Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

[Mode for Practicing the Invention]

Hereinafter, preferred examples of the present disclosure are described for the purpose of illustrating the present disclosure, but it will be apparent to those skilled in the art that various changes and modifications are possible within the scope of the present disclosure and the technical idea, and that such changes and modifications fall within the scope of the appended patent claims.

**Example 1**

In the glove box, the raw materials were ground by hand milling for 30 minutes and then subjected to a solid-phase synthesis method by heat treatment at a temperature of 520°C under an Ar atmosphere for 12 hours to prepare a sulfide-based solid electrolyte. The raw materials were 2 moles of lithium sulfide ($Li_2S$, Mitsuwa Chemical), 0.47 moles of phosphorus pentasulfide ($P_2S_5$, Aldrich), 1.5 moles of lithium chloride (LiCl, Aldrich), 0.03 moles of silicon (Si, Sigma Aldrich), and 0.03 moles of tin sulfide ($SnS_2$, Kojundo).

**Comparative Example 1**

$Li_{5.5}PS_{4.5}Cl_{1.5}$ was prepared in the same manner as Example 1 except that no substituent was substituted at the P site. The raw materials were 2 moles of lithium sulfide ($Li_2S$, Mitsuwa Chemical), 0.5 moles of phosphorus pentasulfide ($P_2S_5$, Aldrich), and 1.5 moles of lithium chloride (LiCl, Aldrich).

**Comparative Example 2**

$Li_{5.5}P_{0.94}Sn_{0.06}S_{4.5}Cl_{1.5}$ was prepared in the same way as Example 1, except that only one substituent, i.e., Sn, was substituted at the P site. The raw materials were 2 moles of lithium sulfide ($Li_2S$, Mitsuwa Chemical), 0.47 moles of phosphorus pentasulfide ($P_2S_5$, Aldrich), 1.5 moles of lithium chloride (LiCl, Aldrich), and 0.06 moles of tin sulfide ($SnS_2$, Kojundo).

**Experimental Example 1: Measurement of ionic conductivity**

To measure the ionic conductivity of the sulfide-based solid electrolytes prepared in the Example and Comparative Examples, an electrochemical impedance spectroscopy (EIS) analysis was performed.

EP 4 641 734 A1

For the EIS analysis, an electrode cell was fabricated. The electrode cell was prepared using a 13 mm diameter electrode, by adding 200 mg of the sulfide-based solid electrolyte to the electrode and pressurizing it to a pressure of 360 MPa.

Using an electrochemical impedance spectrometer (EIS, VMP300Bio Logic), the ionic conductivity of the sulfide-based solid electrolyte was calculated by measuring the resistance at 25°C, AC 0.1 V and a frequency of 1 Hz to 0.1 MHz using Formula 1 below.

<Formula 1>

$$\sigma_i = \frac{L}{RA}$$

In Formula 1, $\sigma_i$ is the ionic conductivity of the sulfide-based solid electrolyte (mS/cm), R is the resistance of the sulfide-based solid electrolyte ($\Omega$) measured by the above electrochemical impedance spectrometer, L is the thickness of the sulfide-based solid electrolyte ($\mu$m), and A is the area of the sulfide-based solid electrolyte ($cm^2$).

Table 1 below shows the composition and measured ionic conductivity of the sulfide-based solid electrolytes prepared in the Example and Comparative Examples. The compositions of the sulfide-based solid electrolytes listed in Table 1 below show the composition of each element in Formula 1.

[Table 1]

|  | Li | P | Sn | Sb | Si | S | Cl | Ionic conductivity (mS/cm) |
|---|---|---|---|---|---|---|---|---|
| Example 1 | 5.5 | 0.94 | 0.03 | 0.00 | 0.03 | 4.5 | 1.5 | 5.4 |
| Comparative Example 1 | 5.5 | 1 | 0 | 0 | 0 | 4.5 | 1.5 | 3.89 |
| Comparative Example 2 | 5.5 | 0.94 | 0.06 | 0 | 0 | 4.5 | 1.5 | 4.26 |

Referring to Table 1 above, it can be seen that Example 1, where a portion of the P site is substituted with two substituents, has the best ionic conductivity.

Although the present disclosure has been described above by way of limited examples and drawings, the invention is not limited thereby, and various modifications and variations may be made by those having ordinary skill in the art, within the technical idea of the invention and the equivalent scope of the patent claims set forth below.

**Claims**

1. A sulfide-based solid electrolyte, containing lithium (Li), phosphorus (P), sulfur (S), chlorine (C) and M,
   wherein M is included in a partially substituted form at the phosphorus (P) site and comprises at least two selected from the group consisting of Ge, Sn, Sb and Si.

2. The sulfide-based solid electrolyte according to claim 1,

   wherein the sulfide-based solid electrolyte is represented by Formula 1 below:

   <Formula 1>      $Li_{(6-x)}P_yM_{(1-y)}S_{(5-x)}Cl_{(1+x)}$

   wherein x is 0 < x < 0.6, and y is 0 < y $\leq$ 0.9,
   wherein M is $M1_aM2_b$ (wherein 0 < a+b $\leq$ 0.1, and a+b = 1-y), $M1_aM2_bM3_c$ (wherein 0 < a+b+c $\leq$ 0.1, and a+b+c = 1-y) or $M1_aM2_bM3_cM4_d$ (wherein 0 < a+b+c+d $\leq$ 0.1, and a+b+c+d = 1-y),
   wherein M1, M2, M3, and M4 are different elements selected from the group consisting of Ge, Si, Sb and Sn, respectively.

3. The sulfide-based solid electrolyte according to claim 1,
   wherein the two or more elements substituted at the phosphorus (P) site are substituted in equal proportions, such that M is $M1_aM2_b$ (wherein 0 < a+b $\leq$ 0.1, a+b = 1-y, and a=b), $M1_aM2_bM3_c$ (wherein 0 < a+b+c $\leq$ 0.1, a+b+c = 1-y, and a=b=c) or $M1_aM2_bM3_cM4_d$ (wherein 0 < a+b+c+d $\leq$ 0.1, a+b+c+d = 1-y, and a=b=c=d).

8

4. The sulfide-based solid electrolyte according to claim 1,
   wherein the sulfide-based solid electrolyte has an argyrodite-type crystal structure.

5. The sulfide-based solid electrolyte according to claim 1,
   wherein the sulfide-based solid electrolyte has an ionic conductivity of 4 to 6 mS/cm.

6. The sulfide-based solid electrolyte according to claim 1,
   wherein the impurity content in the sulfide-based solid electrolyte is 0% to 5% based on the intensity of the XRD main peak.

7. The sulfide-based solid electrolyte according to claim 6,
   wherein the impurity comprises $Li_2S$, $LiCl$, or a compound thereof.

8. An all-solid-state battery comprising a positive electrode, a negative electrode, and a sulfide-based solid electrolyte interposed therebetween according to claim 1.

9. The all-solid-state battery according to claim 8,
   wherein the negative electrode is a lithium negative electrode comprising a lithium metal.

## INTERNATIONAL SEARCH REPORT

| International application No. |
| --- |
| **PCT/KR2025/099014** |

| A. | CLASSIFICATION OF SUBJECT MATTER |
| --- | --- |

**H01M 10/0562**(2010.01)i; **H01M 4/134**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 10/0562(2010.01); C01F 17/10(2020.01); C01F 17/30(2020.01); H01B 1/06(2006.01); H01M 10/052(2010.01); H01M 4/133(2010.01); H01M 6/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지 (all-solid battery), 황화물계 고체전해질 (sulfide-based solid electrolyte), 인 (phosphorus, P), 염소 (chlorine, Cl), 치환 (substitution), 아지로다이트 (argyrodite), 게르마늄 (germanium, Ge), 주석 (tin, Sn), 안티몬 (stibium, Sb), 규소 (silicone, Si), 불순물 (impurity), 이온 전도도 (ion conductivity), P 자리 (P-site)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2023-0136157 A (MITSUI MINING & SMELTING CO., LTD.) 26 September 2023 (2023-09-26)<br>See claims 1, 7 and 11; paragraphs [0004], [0013]-[0015], [0020]-[0022], [0027]-[0032], [0035], [0048], [0053], [0054], [0059] and [0086]; and table 1. | 1-5,8,9 |
| Y | | 6,7 |
| Y | KR 10-2023-0120192 A (UNIVERSITY OF ULSAN FOUNDATION FOR INDUSTRY COOPERATION) 17 August 2023 (2023-08-17)<br>See claim 15; and paragraphs [0074]-[0076] and [0081]-[0084]. | 6,7 |
| A | KR 10-2022-0043754 A (SAMSUNG SDI CO., LTD.) 05 April 2022 (2022-04-05)<br>See abstract; and claims 1-18. | 1-9 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 April 2025** | **18 April 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/099014** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2021-0148306 A (CHINA AUTOMOTIVE BATTERY RESEARCH INSTITUTE CO., LTD. et al.) 07 December 2021 (2021-12-07)<br>See abstract; and claims 1-11. | 1-9 |
| A | JP 2015-220015 A (TOYOTA MOTOR CORP.) 07 December 2015 (2015-12-07)<br>See abstract; and claims 1-9. | 1-9 |

Form PCT/ISA/210 (second sheet) (July 2022)

**INTERNATIONAL SEARCH REPORT**
Information on patent family members

International application No.

**PCT/KR2025/099014**

| Patent document cited in search report | | | Publication date (day/month/year) | Patent family member(s) | | | Publication date (day/month/year) |
|---|---|---|---|---|---|---|---|
| KR | 10-2023-0136157 | A | 26 September 2023 | CN | 117099168 | A | 21 November 2023 |
| | | | | EP | 4317059 | A1 | 07 February 2024 |
| | | | | JP | 7570498 | B2 | 21 October 2024 |
| | | | | TW | 202245318 | A | 16 November 2022 |
| | | | | US | 2024-0128497 | A1 | 18 April 2024 |
| | | | | WO | 2022-210471 | A1 | 06 October 2022 |
| KR | 10-2023-0120192 | A | 17 August 2023 | KR | 10-2784273 | B1 | 24 March 2025 |
| KR | 10-2022-0043754 | A | 05 April 2022 | EP | 4224588 | A1 | 09 August 2023 |
| | | | | EP | 4224588 | A4 | 15 January 2025 |
| | | | | JP | 2023-542727 | A | 11 October 2023 |
| | | | | JP | 7617255 | B2 | 17 January 2025 |
| | | | | US | 2023-0352728 | A1 | 02 November 2023 |
| | | | | WO | 2022-071644 | A1 | 07 April 2022 |
| KR | 10-2021-0148306 | A | 07 December 2021 | CN | 110085908 | A | 02 August 2019 |
| | | | | CN | 110085908 | B | 17 September 2021 |
| | | | | CN | 113614971 | A | 05 November 2021 |
| | | | | CN | 113614971 | B | 11 October 2024 |
| | | | | EP | 3893308 | A1 | 13 October 2021 |
| | | | | EP | 3893308 | A4 | 16 March 2022 |
| | | | | EP | 3893308 | B1 | 08 February 2023 |
| | | | | ES | 2943111 | T3 | 09 June 2023 |
| | | | | JP | 2022-502341 | A | 11 January 2022 |
| | | | | JP | 7129075 | B2 | 01 September 2022 |
| | | | | KR | 10-2025-0034128 | A | 10 March 2025 |
| | | | | US | 2022-0131182 | A1 | 28 April 2022 |
| | | | | WO | 2020-220676 | A1 | 05 November 2020 |
| JP | 2015-220015 | A | 07 December 2015 | CN | 105098229 | A | 25 November 2015 |
| | | | | CN | 105098229 | B | 23 March 2018 |
| | | | | DE | 102015107399 | A1 | 19 November 2015 |
| | | | | JP | 6044588 | B2 | 14 December 2016 |
| | | | | KR | 10-1687485 | B1 | 19 December 2016 |
| | | | | KR | 10-2015-0131970 | A | 25 November 2015 |
| | | | | US | 10305140 | B2 | 28 May 2019 |
| | | | | US | 2015-0333367 | A1 | 19 November 2015 |

## EP 4 641 734 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240013764
- JP 2015022015 A